# EUROPEAN PATENT SPECIFICATION

(11) **EP 1 861 914 B1**
(45) Date of publication and mention of the grant of the patent: **03.12.2008**
(21) Application number: 05800391.4
(22) Date of filing: 24.10.2005
(51) Int. Cl.: H02M 7/48, H02M 7/538, H02J 3/38

(54) **INVERTER**
WECHSELRICHTER
ONDULEUR

(43) Date of publication of application: 05.12.2007
(73) Proprietor: Conergy AG, 20537 Hamburg (DE)
(72) Inventor: KNAUP, Peter, 64673 Zwingenberg/Bergstrasse (DE)
(74) Representative: Eisenführ, Speiser & Partner
(86) International application number: PCT/EP2005/011402
(87) International publication number: WO 2007/048420

(56) References cited:
- WO-A-02/087062
- GB-A- 1 509 451
- US-A1- 2004 052 099

## Description

The invention relates to an inverter for converting a DC voltage into an AC voltage having one or more phases. The invention also relates to a solar energy system comprising an inverter and a solar generator.

Inverters are generally well known. They are used, for example, to feed energy generated by a photovoltaic generator, and available in the form of direct current and voltage, into an AC grid such as the European power grid or into a stand-alone grid in the form of an alternating current and voltage. This grid feed may be one-phase or multi-phase, and specifically three-phase. An inverter designed for this purpose has an intermediate DC circuit to which the energy to be fed to the grid is supplied in the form of a DC voltage.

One subcircuit is connected to the intermediate DC circuit for each phase of the AC voltage to be generated. In a "full bridge", each subcircuit has first and a second AC terminal to which the voltage of the intermediate circuit is supplied with different pulse widths and varying polarity. The result is a pulsed voltage signal between the first and second AC terminals. By connecting one or a plurality of coils, an approximately sinusoidal current results from the pulsed AC voltage signal if the appropriate pulse is selected. The frequency of the pulsed voltage is usually many times higher than the frequency of the approximately sinusoidal current.

One disadvantage of such prior art is that negative voltage pulses occur during a positive half-wave of the current, and that positive voltage pulses occur during a negative phase of the current, thus resulting in reactive power that causes power losses in the inverter. Another drawback is that the pulsed voltage applied to chokes provided between the AC connection terminals and the power grid being fed is at levels ranging up to the voltage in the intermediate DC circuit. The chokes must be correspondingly large in design. In "full bridges", particularly when the inverter is being used for photovoltaic generators, it is disadvantageous that the switching necessary to generate the voltage pulses results in a potential shift to earth that is also erratic. Photovoltaic generators generally have a high-capacitance coupling to earth due to their large area. As a result of the aforementioned potential shifts, particularly potential jumps, stray currents are leaked to earth by capacitative coupling.

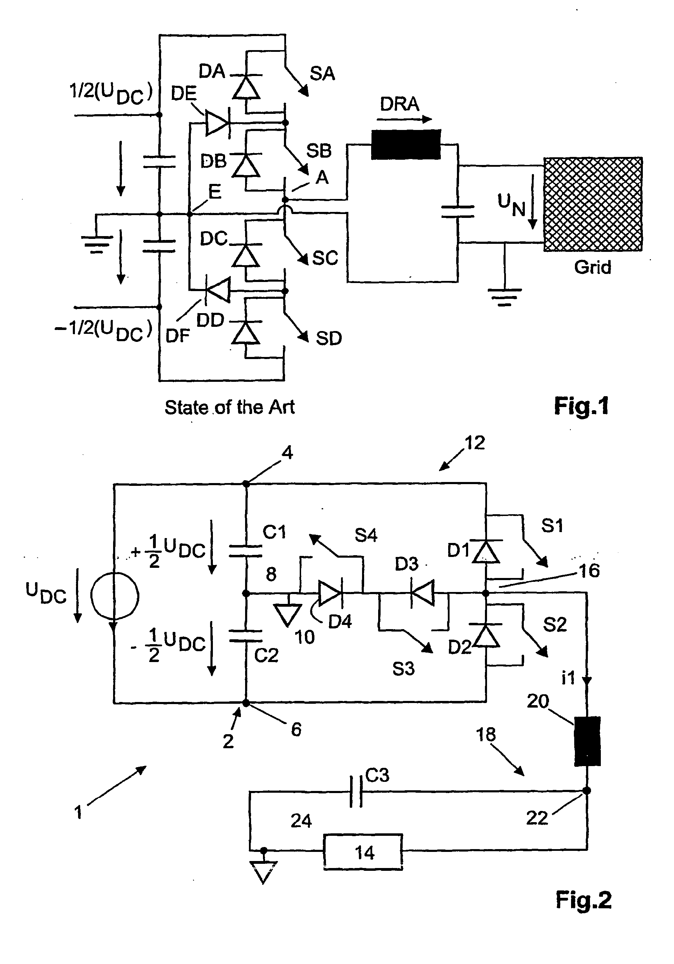

To eliminate or at least mitigate the aforementioned problems, there is a known inverter in which the intermediate DC circuit is split, with an earthed middle point and a three-point circuit as shown in Figure 1. The direct voltage at intermediate circuit (U_{DC}) is split in two halves, one half having a positive voltage and the other half having a negative voltage to earth (+ ½ U_{DC} und - ½ U_{DC}). There is also only one AC node present at which a pulsed voltage to earth is generated. For a set value set for the positive half-wave, the positive voltage of the intermediate DC circuit is pulsed by switches SA and SB to AC node A disposed between switches SB and SC. Correspondingly, the negative voltage of the intermediate DC circuit is pulsed by switches SC and SD to AC node A for a negative half-wave.

For a positive half-wave, this means in detail that the positive intermediate circuit voltage is pulsed to AC node A by means of switch SA. When this occurs, switch SB is in the closed position. The pulsed voltage signal leads to a continuous, partly positive current in choke DRA, such positive current flows from the positive side of the intermediate circuit through switches SA and SB via AC node A and through choke D to the grid. However, this current path is interrupted by opening switch SA for pulsing. It is now possible for the current which is still being driven through choke D to continue flowing from the common earth connection E via diode DE and switch SB. To generate a negative voltage half-wave, both switches SA and SB are opened and the negative voltage of the intermediate DC. circuit is pulsed by means of switches SC and SD to AC node A. Switch SB must be opened in the latter case, because otherwise a negative voltage at AC node A would cause a short-circuit current to flow from the common earth connection for intermediate circuit E through diode DE and switch SB to AC node A.

The disadvantage of the known 3-point circuit is that the current must flow from the positive terminal of the intermediate circuit to AC node A via two switches (SA and SB), or from AC node A via two switches (SC and SD) to the negative terminal of the intermediate DC circuit. Since switches SA to SD are configured in the prior art as solid-state switches, such as IGBTs, considerable power losses occur at said switches. In addition, having to use six diodes for a half bridge makes the circuitry very complicated and expensive. A further prior art invertes is disclosed in document US 2004/0052099 A1.

One problem in particular that arises when feeding energy from photovoltaic generators into the grid is that these generators are often only able to supply a weak direct voltage. Using an inverter to feed current into a power grid, particularly into the European grid network, therefore necessitates boosting the direct voltage from the photovoltaic generator in the intermediate DC circuit of the inverter prior to grid feeding. Another option is to use a lower voltage in the intermediate DC circuit, but to convert the generated alternating voltage to the desired voltage level by means of a transformer, in particular to the voltage of the grid into which power is being fed. Additional apparatus is required in both cases, making the procurement and/or operation of the inverter more expensive and financially unprofitable.

The object of the present invention is therefore to provide an inverter that at least reduces the aforementioned problems, that causes less power loss in comparison to known half bridges, in particular, and which requires fewer components.

The invention proposes an inverter as defined in claim 1. The invention also proposes an invention according to claim 11, and a solar energy system pursuant to claim 14 and a method for converting DC voltage into an AC voltage according to claim 16.

The inverter is preferably configured as set forth in claim 2, according to which the inverter has an intermediate DC circuit having a first and a second DC capacitor unit connected in series between a first and a second terminal of the intermediate DC circuit, and a common earth connection in the intermediate circuit. Single capacitors can be used as DC capacitor units. A DC voltage is applied to the first and second terminals of the intermediate DC circuit, and in operation a direct current is fed to the circuit, for example from a photovoltaic generator. Disposed between the two DC capacitor units there is an earth terminal at which said two DC capacitor units are also connected to each other. The DC voltage applied to the intermediate DC circuit is split into two halves as a result, such that half the positive intermediate circuit voltage is applied to the first terminal of the intermediate DC circuit, and half the negative intermediate circuit voltage to earth is applied to the second terminal of the intermediate DC circuit.

At least one subcircuit is connected to the intermediate DC circuit, each such subcircuit generating one phase of the alternating voltage. A first and a second auxiliary switch each with a diode connected in parallel are connected in series to the common earth connection of the intermediate circuit. The other terminal of this series circuit with the two auxiliary switches is connected to an AC node to which a pulsed voltage is supplied when the inverter is in operation. The diodes of the auxiliary switches are connected to each other with opposite forward direction such that whenever both auxiliary switches are open, no current can flow between the common earth connection and the AC node. If one auxiliary switch is closed, current can only flow in the direction permitted by the diode that is connected in parallel to the other, open switch. Only when both auxiliary switches are closed current can flow in both directions.

To supply the pulsed voltage, two power switches each having a diode connected in parallel are connected in series between the first and second terminals of the intermediate DC circuit. The connection point of the two power switches, and hence of the two diodes connected in parallel to the power switches, is connected to the AC node. The diodes of said power switches are connected to each other with the same forward direction such that they block current from flowing from the first terminal of the intermediate DC circuit to the second terminal of the intermediate DC circuit.

By means of this circuit arrangement, a pulsed voltage can be generated at the AC node of each subcircuit. To produce a positive voltage half-wave, the positive half of the intermediate circuit voltage is pulsed to the AC node by means of the first power switch and the first auxiliary switch. For a negative voltage half-wave, the negative half of the intermediate circuit voltage is pulsed likewise to the AC node by means of the second power switch and the second auxiliary switch.

A current is produced when an inductive load is connected between the AC node and earth, for example a choke or a transformer. When generating a positive voltage half-wave and a positive current, said current flows from the first terminal of the intermediate DC circuit via the first power switch to the AC node if the first power switch is closed. The current therefore flows through one power switch only, thus enabling a reduction in power loss. If the first power switch is open when generating a positive voltage half-wave, the current can continue to flow from the common earth connection via the two series-connected auxiliary switches to the AC node, but this is contingent on the auxiliary switch being closed whose parallel-connected diode blocks any current flowing from the common earth connection in the direction of the AC node.

By using the zero state in switching cycles especially when the current and the set value for the voltage are both positive or negative, the invention makes it possible for little or no reactive power to be produced and transported via the power switches and diodes, and through any filter chokes that are connected. Power losses can also be reduced compared to those in a conventional 3-point circuit by having only one power switch conductive at any one time, aside from the zero state.

In this way, the overall efficiency of the inverter can be increased. This includes increasing its degree of efficiency, achieving a more compact construction and/or weight savings, because the filter chokes can be reduced due to smaller pulse levels relative to those necessary in known full bridges at least, and because only minimal, operationally induced stray currents occur compared to those in full bridges. In addition, the invention requires two diodes less than prior art half bridges.

The two DC capacitor units preferably have the same capacitance, so that the intermediate DC circuit is symmetrical. When a DC voltage is applied between the first and second terminals of the intermediate DC circuit, the common earth connection of the intermediate circuit carries the mid-voltage between the first and second terminals of the intermediate DC circuit.

In another embodiment of the invention, auxiliary and/or power switches are used which can conduct current in one forward direction only, said switches being connected in parallel to the respective diodes with opposite forward directions. Such a forward direction for the switches results when solid-state switches such as transistors or thyristors are used. IGBTs, MOSFETs and GTOs, in particular, can be used.

It is beneficial that each of the subcircuits comprises an AC output and a choke, said choke being connected between the AC node and the AC output. By means of the chokes, it is possible by pulsing the voltage appropriately to obtain a sinusoidal current at the AC node, or to favour such a current when other inductive components are present. A choke is provided in particular when the inverter is operated without a transformer. In an inverter according to the invention, such a choke can be smaller in dimension than in a prior art inverter with full bridge, for example, because a maximum of only half the pulsed intermediate circuit voltage is applied to the choke.

An additional capacitor is preferably connected to the AC output of each subcircuit, in particular a single capacitor to earth. Two connection points of a power grid into which power is to be fed are connected in parallel to such a capacitor. The voltage across this additional capacitor unit is thus equal to the grid voltage of the respective phase. This additional capacitor unit therefore smooths the voltage, with the result that a favourable time-voltage waveform for grid feeding can be achieved. Combined the additional capacitor unit with the aforementioned choke results in an LC smoothing circuit.

According to one preferred embodiment, a controller for controlling the auxiliary and/or power switches is provided. The inverter is beneficially configured to produce a pulse modulated voltage signal at the AC node of each of the subcircuits, in order to generate an AC voltage. The inventive inverter topology can be used to produce one or more pulse modulated voltage signals for generating an alternating voltage with one or more corresponding phases. The auxiliary and power switches are controlled by means of the controller in order to achieve a switching sequence for generating the pulsed voltage. The interactions for defining the specific pulse pattern and hence the switching states independently of a desired current or voltage waveform are already included in the inverter, for example in the form of appropriate software. The voltage amplitude, frequency and phase can be defined externally and/or are dependent on the grid into which power is fed.

According to another embodiment of the invention, the AC node or AC output of each of subcircuit is connected to a transformer. Although the inverter according to the invention is basically suitable for feeding power into a grid even without a transformer, cases can indeed arise in which a transformer is connected to the inverter on the output side. One such case, for example, is when a small photovoltaic generator is used on the input side and only a small intermediate circuit voltage is available, and/or when power is to be fed into a grid at such a high voltage that a transformer is necessary. Depending on the specific application, it is possible to dispense with the choke and the additional capacitor unit when a transformer is used.

Due to its topology, in particular, the inverter according to the invention is basically suitable for one-phase grid feeding. One subcircuit suffices in such a case. According to a further embodiment, the inverter is configured with three subcircuits for feeding a three-phase power grid. This means that a separate subcircuit is provided for each phase of the alternating voltage to be generated. Each of the subcircuits provides at its AC node or its AC output a voltage for feeding into one phase of the power grid. Preferably, all subcircuits are connected to one single intermediate DC circuit.

An inverter pursuant to claim 11 is also proposed. Said inverter has three AC terminals that can correspond to the AC nodes when three subcircuits are used. A three-phase transformer with a star connection on both the primary and secondary side is connected to the AC terminals. The primary coil side is connected to the AC terminals, and the neutral point on the primary side can be connected to a common earth terminal in the inverter's intermediate DC circuit. A voltage signal is now supplied to each of the three AC terminals and to the respective line on the primary side of the transformer. This results in a voltage signal being generated on each corresponding line on the secondary side of the transformer, namely three phase voltages. By pulsing the inverter accordingly, said three phase voltages have a sinusoidal fundamental wave with a fundamental frequency that is superimposed by a third harmonic wave with a frequency three times that of the fundamental frequency. Due to the pulsing, additional smaller signals, particularly harmonics, may be superimposed as well, but are considered not being relevant. It is favourable if the fundamental waves are in phase with the third harmonic wave, such that the zero crossover of each rising edge of the fundamental wave coincides in time with the zero crossover of a rising edge of the third harmonic. The fundamental waves of the phase voltages are also shifted 120° to each other. Due to the star connection on the secondary side of the transformer, the line voltage resulting between a first and a second line is the difference between the phase voltages on the first and second lines. Whereas the two fundamental waves of a first and second phase voltage are phase shifted by 120° to each other, the respective superimposed harmonics are not phase shifted to each other due to their having three times the frequency of the fundamental waves. As a result, the voltage difference between two phase voltages that are not sinusoidal due to the superimposed third harmonic is nevertheless a sinusoidal wave for the respective line voltage, because the third harmonics are deleted by the substraction.

This means that a sinusoidal three-phase system can be generated on the secondary side, even though a highly distorted signal is fed in and transferred on the primary side. Due to the superimposition of the third harmonic on a fundamental wave, with the third harmonics being in phase, a distortion of the fundamental wave is achieved such that its maximum value is reduced. A distorted signal of this kind can thus be generated in an inverter with intermediate DC circuit by means of a lower intermediate circuit voltage. Thus, by adding the third harmonic, it is still possible to generate a sinusoidal three-phase AC voltage of sufficient amplitude on the secondary side of the transformer even when the intermediate circuit voltage is reduced.

The added third harmonic can basically have any amplitude, however the amplitude should be set according to boundary condition such as the intermediate circuit voltage available and the transformer being used, in particular its saturation behaviour. Favourable values for the amplitude of the third harmonic lie in a range between one quarter and one eighth of the fundamental wave amplitude. The amplitude of the third harmonic is preferably one sixth the fundamental wave amplitude, which is the optimum value with respect to minimizing the intermediate circuit voltage.

It is favourable for a solar energy system to comprise an inverter according to the invention and a photovoltaic generator. In such a configuration, the photovoltaic generator supplies a DC voltage that is fed to the intermediate DC circuit of the inverter either directly or by using a boost converter. The inverter then generates a one-phase or multi-phase alternating voltage from the intermediate circuit voltage. The inverter and hence the solar energy system as a whole are configured to feed current into a power grid. To do this, the solar energy system must be connectable to the power grid and capable, in particular, of synchronising the size and phase of the voltage being fed with that of the power grid.

The invention shall now be described in greater detail with reference to the following figures. These show:
- Figure 1: a prior art inverter circuit with a half bridge and connected grid,
- Figure 2: an inverter circuit according to the invention for feeding a one-phase voltage into a power grid,
- Figure 3: a schematic diagram of an inverter, with a transformer connected by a star connection, and
- Figure 4: some time-voltage waveforms at a transformer.
The prior art half bridge in Figure 1 has four solid-state switches SA to SD, each with a diode DA to DD connected anti-parallel. With the aid of these switches, voltage ½ U_{DC} and - ½ U_{DC} is pulsed at node A. One can see that when voltage pulses are positive, in other words when switches SA and SB are closed and switches SC and SD are open, and a positive current flows through the choke DRA, then said current also flows through switches SA and SB. Accordingly, when there is a negative current flowing through the choke DRA, that current flows through power switches SC and SD when switches SA and SB are open and switches SC and SD are closed.

To understand how an inverter according to the invention operates, the circuit operations shall now be explained in detail with reference to Figure 2.

Inverter 1 has an intermediate DC circuit 2, said circuit having a first and a second terminal 4, 6 and a common earth connection 8. The common earth connection 8 is earthed via terminal 10. The intermediate DC circuit 2 comprises two series connected capacitors C1 and C2.

A subcircuit 12 is connected to intermediate DC circuit 2 for one-phase feeding to a power grid 14. Subcircuit 12 has an AC node 16 at which a pulsed voltage is provided. To achieve this, a first and a second power switch S1 and S2 are connected between the first and second terminals 4 and 6, respectively, of intermediate DC circuit 2 and AC node 16. A series circuit comprising first and second auxiliary switches S3 and S4 is connected between the common earth connection 8 and AC node 16. All the power and auxiliary switches are configured as solid-state switches and can conduct currents in one forward direction only. Connected anti-parallel to each of the power and auxiliary switches S1 - S4, i.e. in parallel but with opposite forward direction, is a diode D1 - D4. An LC smoothing circuit 18 with a choke 20 and an additional capacitor C3 is connected to AC node 16. Capacitor C3 is connected in parallel to power grid 14. Capacitor C3 and power grid 14 are connected between an AC output 22 and an additional earth terminal 24.

In order to generate a sinusoidal alternating voltage at capacitor C3 and a sinusoidal alternating current at choke 20, the following circuit operations are performed. A basic distinction must be made between the following four operating periods. These depend on whether current i1 is a positive or negative half-wave and whether a positive or negative voltage is pulsed at AC node 16 (+ ½ U_{DC} or - ½ U_{DC}) when the current lags behind the voltage.

In the first operating period, there is a positive half-wave of current i1 through choke 20 and a positive pulsed voltage at AC node 16. To generate a positive voltage value at AC node 16, power switch S1 is closed and a current flows from the first terminal 4 of the intermediate circuit via power switch S1 to choke 20. Auxiliary switch S3 is closed during this first operating period. When power switch S1 is now opened, the voltage at AC node 16 falls to approximately zero volts. Because of choke 20, however, current i1 is substantially maintained and now flows from earth connection 8 via diode D4 and auxiliary switch S3 to choke 20.

When a nominal voltage predefined for the switching behaviour of the inverter drops to zero at the end of the first operating period, the inverter enters the second operating period, in which current i1 is still positive, but a negative voltage is pulsed at AC node 16. During the transition from the first to the second operating period, both power switches S1 and S2 are initially open. As long as auxiliary switch S3 is closed, the current continues to flow from common earth connection 8 via diode D4 and the closed auxiliary switch S3 to AC node 16, where the voltage is approximately zero. When auxiliary switch S3 is now opened, said current is interrupted and current i1, which is still positive at that moment, can only flow from the second terminal 6 via D2 to choke 20. The voltage at AC node 16 thus drops to a value approximately equal to the negative value of the intermediate circuit voltage -½ U_{DC}. To end such a negative voltage pulse at AC node 16, auxiliary switch S3 is closed again so that pulsing is effected by auxiliary switch S3.

Towards the third operating period, current i1 through choke 20 drops to zero, then changes polarity. Auxiliary switch S3 is then opened and auxiliary switch S4 is closed, with both switches remaining in this state during the third operating period. The negative voltage is now pulsed by power switch S2 to AC node 16. If power switch S2 is closed, a negative voltage is applied to the AC node and current i1 then flows substantially from choke 20 via AC node 16 and power switch S2 to the second terminal 6 of intermediate DC circuit 2. By opening switch S2, the negative voltage pulse is ended and AC node 16 acquires a voltage of approximately zero volts. Current i1 can now flow through diode D3 and auxiliary switch S4 connected thereto to the common earth connection 8 and from there to earth terminal 10. The switching operations of power switch S2 and auxiliary switch S4 thus occur in this third operating period analogously to the switching operations of power switch S1 and auxiliary switch S3 during the first operating period.

When the setpoint for a time-voltage waveform at AC node 16 drops towards zero and becomes negative, in other words when a positive voltage is to be pulsed at AC node 16 but current i1 is still negative, the fourth operating period begins, in which power switches S1 and S2 and auxiliary switch S3 are open, and a positive voltage is pulsed to AC node 16 by means of auxiliary switch S4 in a manner analogous to the switching operation of auxiliary switch S3 during the second operating period. When current i1 rises towards zero and becomes positive towards the end of the fourth operating period, the first operating period recommences.

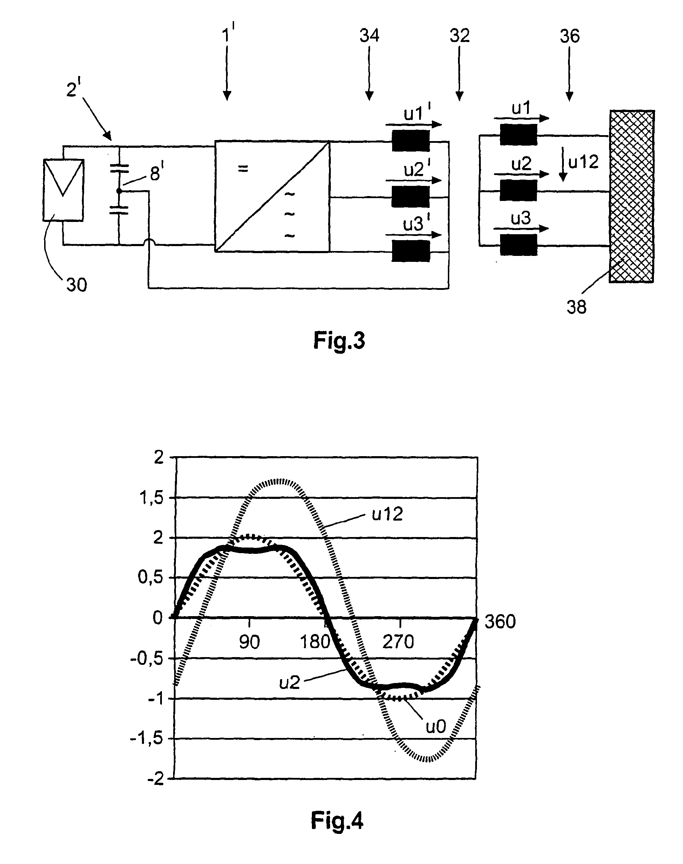

Inverter 1' shown in schematic form in Figure 3 has an intermediate DC circuit 2' with a centre 8'. Intermediate DC circuit 2' is connected to a photovoltaic system 30 that supplies a DC voltage. On its output side, three-phase inverter 1' is connected to a transformer 32. Transformer 32 has a star connection on both its primary side, which is connected to inverter 1', and on its secondary side 36, which is connected to power grid 38.

inverter 1 outputs phase voltages u1' to u3' at the primary side 34 of transformer 32, said phase voltages resulting on the secondary side to phase voltages u1 to u3. The line voltages result from the difference between the respective phase voltages. Line voltage u12 is the difference between phase voltages u2 and u1, i.e. u12 = u2 - u1.

Figure 4 shows a first harmonic u0 of phase voltage u2 and line voltage u12. Phase voltage u1 is not shown, but differs from phase voltage u2 only by the fact that it is 120° earlier. Phase voltages u1 and u2 comprise a fundamental wave and have a superimposed third harmonic of equal phase. A comparison of phase voltage u2 and its fundamental wave u0 shows that superimposition with the third harmonic causes a flattening of each half-wave. When the difference between the two phase voltages u2 and u1 is formed, the third harmonic superimposed on the two is eliminated, with the result that a sinusoidal waveform without any further superimposition results, as shown by the waveform of line voltage u12.

## Claims

1. An inverter (1) for converting a DC voltage into an AC voltage with one or more phases, comprising
- at least one subcircuit (12) for generating one phase of the alternating voltage, each subcircuit comprising:
- a first and a second auxiliary switch (S3,S4) each with a diode (D3,D4) connected in parallel, and
- an AC node (16) for supplying a pulsed voltage, the diodes of said first and second auxiliary switches being connected to each other with opposite forward directions
**characterized in that** said invertes further comprises:
- an intermediate DC circuit (C1,C2) having a first and a second DC capacitor unit connected in series between a first and a second terminal (4,6) of the intermediate DC circuit, and a common earth connection (8) whereby the common earth connection carries the mid-voltage between the first and the second terminal, the first and second auxiliary switches being connected in series between the common earth connection of the intermediate DC circuit and the AC node.

2. Inverter according to claim 1, **characterised in that** each of the subcircuits comprises:
- a first and a second power switch (S1,S2), each with a diode (D1,D2) connected in parallel, wherein said two power switches are
- connected in series between the first and second terminal (4,6) of the ntermediate DC circuit (2),
- connected to a common connection point at the AC node and
- the diodes of said power switches being connected to each other with the same forward direction.

3. Inverter according to claim 1 or 2, **characterised in that** the two DC capacitor units have the same capacitance.

4. Inverter according to one of the preceding claims, **characterised in that** the auxiliary and/or power switches can conduct current in one forward direction only, said switches being connected in parallel to the respective diodes with opposite forward directions.

5. Inverter according to one of the preceding claims, **characterised in that** each of the subcircuits comprises
- an AC output (22) and
- a choke (20) connected between the AC node and the AC output.

6. Inverter according to claim 5, **characterised in that** each of the subcircuits includes an additional capacitor unit (C3) connected between the AC output and earth.

7. Inverter according to one of the preceding claims, **characterised in that** a controller for controlling the auxiliary and/or power switches is provided.

8. Inverter according to one of the preceding claims, **characterised in that** the inverter is configured to produce a pulse modulated voltage signal at the AC node of each subcircuit in order to generate an AC voltage at each subcircuit.

9. Inverter according to one of the preceding claims, **characterised in that** the AC node or AC output of each of the subcircuits is connected to a transformer (32).

10. Inverter according to one of the preceding claims, **characterised in that** three subcircuits are provided for feeding the output into a three-phase grid (38).

11. Inverter according to one of the preceding claims, for generating a three-phase AC voltage, comprising:
- three AC terminals,
- a three-phase transformer connected by its primary coil to the AC terminals in a star connection, and connected by its secondary coil in a star connection, the inverter being configured
- to generate a pulsed voltage signal at each of the AC terminals such that phase voltages having each a sinusoidal fundamental wave of a fundamental frequency and a third harmonic of triple the fundamental frequency are produced at the secondary coil of the transformer.

12. Inverter according to claim 11, **characterised in that**
- the fundamental wave is in phase with the third harmonic and
- the fundamental waves of the phase voltages are shifted 120° to each other.

13. Inverter according to claim 11 or 12, **characterised in that**
the amplitude of the fundamental wave in each phase voltage is four to eight times, in particular six times the amplitude of the third harmonic.

14. A solar energy system comprising
- an inverter according to one of the preceding claims and
- a photovoltaic generator (30).

15. Solar system according to claim 14, **characterised in that**
- a voltage generated by the photovoltaic generator is supplied to the intermediate DC circuit and
- the solar energy system is configured for connection to a power grid in order to feed current to said grid.

16. Method for converting a DC voltage into an AC voltage by pulsing a DC voltage to at least one AC node **characterized in that**
an inverter according to one of the claims 1-13 is utilized.

## Patentansprüche

1. Wechselrichter (1) zum Umwandeln einer Gleichspannung in eine Wechselspannung mit einer oder mehreren Phasen, mit
- mindestens einer Teilschaltungsanordnung (12) zum Generieren einer Phase der Wechselspannung, wobei jede Teilschaltungsanordnung umfasst:
- einen ersten und einen zweiten Hilfsschalter (S3, S4), zu denen jeweils eine Diode (D3, D4) parallel geschaltet ist und
- einen Wechselspannungsknotenpunkt (16) zum Anlegen einer gepulsten Spannung, wobei
die Dioden des Hilfsschalters zueinander in entgegengesetzter Durchlassrichtung angeschlossen sind, **dadurch gekennzeichnet, dass** der Wechselrichter weiter umfasst:
einen Gleichspannungszwischenkreis (2) mit einer ersten und einer zweiten Zwischenkreiskondensatoreinheit (C1, C2), die in einer Reihenschaltung zwischen einem ersten und einem zweiten Anschluss (4, 6) des Gleichspannungszwischenkreises angeordnet sind und einen gemeinsamen Zwischenkreiserdungsanschluss (8) aufweisen wobei sich an dem gemeinsamen Erdanschluss die Spannungsmitte zwischen dem ersten und zweiten Anschluss einstellt wobei
der erste und zweite Hilfsschalter zwischen dem gemeinsamen Zwischenkreiserdungsanschluss und dem Wechselspannungsknotenpunkt in Reihe angeschlossen sind.

2. Wechselrichter nach Anspruch 1, **dadurch gekennzeichnet, dass** jede der Teilschaltungsanordnungen umfasst:
- einen ersten und einen zweiten Leistungsschalter (S1, S2), zu denen jeweils eine Diode (D1, D2) parallel geschaltet ist, wobei diese beiden Leistungsschalter
- in einer Reihenschaltung zwischen dem ersten und zweiten Anschluss (4, 6) des Gleichspannungszwischenkreises (2) angeschlossen sind,
- mit einem gemeinsamen Anschlusspunkt an dem Wechselspannungsknotenpunkt angeschlossen sind und
- die Dioden dieser Leistungsschalter zueinander in gleicher Durchlassrichtung angeschlossen sind.

3. Wechselrichter nach Anspruch 1 oder 2, **dadurch gekennzeichnet, dass** die beiden Zwischenkreiskondensatoreinheiten die gleiche Kapazität aufweisen.

4. Wechselrichter nach einem der vorstehenden Ansprüche, **dadurch gekennzeichnet, dass**
die Hilfs- und/oder Leistungsschalter Strom nur in einer Durchlassrichtung führen können, wobei sie zu der jeweils parallel angeordneten Diode mit entgegengesetzter Durchlassrichtung angeschlossen sind.

5. Wechselrichter nach einem der vorstehenden Ansprüche, **dadurch gekennzeichnet, dass** jede der Teilschaltungsanordnungen umfasst:
- einen Wechselspannungsausgang (22) und
- eine Drossel (20), die zwischen dem Wechselspannungsknotenpunkt und dem Wechselspannungsausgang angeschlossen ist.

6. Wechselrichter nach Anspruch 5, **dadurch gekennzeichnet, dass**
jede der Teilschaltungsanordnungen eine weitere Kondensatoreinheit (3) umfasst, die zwischen dem Wechselspannungsausgang und Erde angeschlossen ist.

7. Wechselrichter nach einem der vorstehenden Ansprüche, **dadurch gekennzeichnet, dass**
eine Steuereinheit zum Steuern der Hilfs- und/oder Leistungsschalter vorgesehen ist.

8. Wechselrichter nach einem der vorstehenden Ansprüche, **dadurch gekennzeichnet, dass**
der Wechselrichter dazu eingerichtet ist, am Wechselspannungsknotenpunkt jeder der Teilschaltungsanordnungen ein pulsmoduliertes Spannungssignal zum Erzeugen einer Wechselspannung zu erzeugen.

9. Wechselrichter nach einem der vorstehenden Ansprüche, **dadurch gekennzeichnet, dass**
der Wechselspannungsknotenpunkt oder Wechselspannungsausgang jeder der Teilschaltungsanordnungen an einen Transformator (32) angeschlossen ist.

10. Wechselrichter nach einem der vorstehenden Ansprüche, **dadurch gekennzeichnet, dass**
zum Einspeisen in ein dreiphasiges Stromnetz (38) drei der Teilschaltungsanordnungen vorgesehen sind.

11. Wechselrichter nach einem der vorstehenden Ansprüche, zum Generieren einer dreiphasigen Wechselspannung, umfassend:
- drei Wechselspannungsanschlüsse,
- einen dreiphasigen Transformator, der an die Wechselspannungsanschlüsse mit seiner Primärseite in Sternschaltung angeschlossen ist, und der sekundärseitig in Sternschaltung geschaltet ist, wobei der Wechselrichter dazu eingerichtet ist,
- an jedem der Wechselspannungsanschlüsse ein getaktetes Spannungssignal so zu erzeugen, dass am Transformator sekundärseitig je eine Strangspannung mit einer sinusförmigen Grundwelle mit einer Grundfrequenz und einer 3.Oberwelle mit dreifacher Grundfrequenz resultiert.

12. Wechselrichter nach Anspruch 11, **dadurch gekennzeichnet, dass**
- die Grundwelle mit der 3.Oberwelle in Phase liegt und
- die Grundwellen der Strangspannungen zueinander um 120° verschoben sind.

13. Wechselrichter nach Anspruch 11 oder 12, **dadurch gekennzeichnet, dass** bei jeder Strangspannung die Amplitude der Grundwelle den vier- bis achtfachen, insbesondere den sechsfachen Wert der Amplitude der 3.Oberwelle aufweist.

14. Solaranlage, umfassend:
- einen Wechselrichter nach einem der vorstehenden Ansprüche und
- einen Photovoltaikgenerator (30).

15. Solaranlage nach Anspruch 14, **dadurch gekennzeichnet, dass**
- eine von dem Photovoltaikgenerator erzeugte Spannung an den Gleichspannungszwischenkreis angelegt wird und
- die Solaranlage dazu eingerichtet ist, zum Einspeisen von Strom an ein Stromnetz angeschlossen zu werden.

16. Verfahren zum Umwandeln einer Gleichspannung in eine Wechselspannung durch Pulsen einer Gleichspannung an wenigstens einem Wechselspannungsknoten, **dadurch gekennzeichnet, dass** ein Wechselrichter nach einem der Ansprüche 1-13 verwendet wird.

## Revendications

1. Onduleur (1) pour convertir une tension CC en une tension CA comportant une ou plusieurs phases, comportant
- un circuit CC intermédiaire (C1, C2) possédant une première et une seconde unités condensateur CC reliées en série entre une première et une seconde bornes (4, 6) du circuit CC intermédiaire, et une mise à la terre commune (8) où la mise à la terre commune transporte la tension moyenne entre la première et la seconde bornes,
**caractérisé en ce que** ledit onduleur comporte en outre :
- au moins un sous-circuit (12) pour générer une phase de la tension alternative, chaque sous-circuit comportant :
- un premier et un second commutateurs auxiliaires (S3, S4), chacun comportant une diode (D3, D4) reliée en parallèle, et
- un noeud CA (16) pour délivrer une tension pulsée,
les diodes desdits premier et second commutateurs auxiliaires étant reliées l'une à l'autre avec des sens avant opposés,
les premier et second commutateurs auxiliaires étant reliés en série entre la mise à la terre commune du circuit CC intermédiaire et du noeud CA.

2. Onduleur selon la revendication 1, **caractérisé en ce que** chaque sous-circuit comporte :
- un premier et un second commutateurs de puissance (S1, S2), chacun comportant une diode (D1, D2) reliée en parallèle, dans lequel lesdits deux commutateurs de puissance sont
- reliés en série entre les première et seconde bornes (4, 6) du circuit CC intermédiaire (2),
- reliés à un point de connexion commun au noeud CA et
- les diodes desdits commutateurs de puissance étant reliées l'une à l'autre avec le même sens avant.

3. Onduleur selon la revendication 1 ou 2, **caractérisé en ce que** les deux unités condensateur CC présentent la même capacité.

4. Onduleur selon l'une des revendications précédentes, **caractérisé en ce que** les commutateurs auxiliaires et/ou de puissance peuvent conduire un courant dans un sens avant seulement, lesdits commutateurs étant reliés en parallèle aux diodes respectives avec des sens avant opposés.

5. Onduleur selon l'une des revendications précédentes, **caractérisé en ce que** chacun des sous-circuit comporte
- une sortie CA (22) et
- une bobine d'inductance (20) reliée entre le noeud CA et la sortie CA.

6. Onduleur selon la revendication 5, **caractérisé en ce que** chacun des sous-circuits comprend une unité condensateur supplémentaire (C3) entre la sortie CA et la terre.

7. Onduleur selon l'une de revendications précédentes, **caractérisé en ce qu'**un contrôleur pour contrôler les commutateurs auxiliaires et/ou de puissance est prévu.

8. Onduleur selon l'une des revendications précédentes, **caractérisé en ce que** l'onduleur est configuré pour produire un signal de tension modulé en impulsions au noeud CA de chacun des sous-circuits afin de générer une tension CA à chaque sous-circuit.

9. Onduleur selon l'une des revendications précédentes, **caractérisé en ce que** le noeud CA ou la sortie CA de chacun des sous-circuits est relié(e) à un transformateur (32).

10. Onduleur selon l'une de revendications précédentes, **caractérisé en ce que** trois sous-circuits sont prévus pour alimenter la sortie dans un réseau triphasé (38).

11. Onduleur selon l'une des revendications précédentes, pour générer une tension CA triphasée, comportant :
- trois bornes CA,
- un transformateur triphasé relié par sa bobine primaire aux bornes CA en une connexion en forme d'étoile, et relié par sa bobine secondaire en une connexion en forme d'étoile, l'onduleur étant configuré
- pour générer un signal de tension pulsée à chacune des bornes CA de sorte que des tensions de phase possédant chacune une onde fondamentale sinusoïdale d'une fréquence fondamentale et un troisième harmonique triple de la fréquence fondamentale sont produites à la bobine secondaire du transformateur.

12. Onduleur selon la revendication 11, **caractérisé en ce que**
- l'onde fondamentale est en phase avec le troisième harmonique et
- les ondes fondamentales des tensions de phase sont décalées de 120° les unes par rapport aux autres.

13. Onduleur selon la revendication 11 ou 12, **caractérisé en ce que** l'amplitude de l'onde fondamentale de chaque tension de phase est quatre à huit fois, en particulier six fois l'amplitude du troisième harmonique.

14. Système d'énergie solaire comportant
- un onduleur selon l'une des revendications précédentes et
- un générateur photovoltaïque (30).

15. Système solaire selon la revendication 14, **caractérisé en ce que**
- une tension générée par le générateur photovoltaïque est délivrée au circuit CC intermédiaires et
- le système d'énergie solaire est configuré pour une connexion à un réseau électrique afin de délivrer du courant audit réseau.

16. Procédé pour convertir une tension CC en une tension CA en pulsant une tension CC à au moins un noeud CA **caractérisé en ce qu'**un onduleur selon l'une des revendications 1 à 13 est utilisé.
